# EUROPEAN PATENT SPECIFICATION

(11) **EP 0 508 414 B1**
(45) Date of publication and mention of the grant of the patent: **24.07.1996**
(21) Application number: 92106086.9
(22) Date of filing: 08.04.1992
(51) Int. Cl.: B23K 11/20, B23K 20/22

(54) **Joined parts of Ni-Ti alloys with different metals and joining method therefor**
Verbundene Teile von Ni-Ti-Legierugen mit verschiedenen Metallen und Verbindungsverfahren dafür
Pièce jointes constitués par des alliages nickel-titane et par des métaux divers et procédé de jonction à cet effet

(30) Priority: 09.04.1991 JP 103452/91
(43) Date of publication of application: 14.10.1992
(73) Proprietor: THE FURUKAWA ELECTRIC CO., LTD., Tokyo (JP); MASUNAGA MENLO PARK CO., LTD., Fukui-ken 910-37 (JP)
(72) Inventor: Nakamura, Masayuki, Yokohama-shi, Kanagawa-ken (JP); Shiroyama, Kaisuke, Zama-shi, Kanagawa-ken (JP); Masunaga, Satoru, Fukui-shi, Fukui-ken (JP); Murata, Kazuo, Fukui-shi, Fukui-ken (JP)
(74) Representative: Pellmann, Hans-Bernd, Dipl.-Ing.

(56) References cited:
- EP-A- 0 235 490
- EP-B- 0 205 859
- DE-A- 3 117 432
- CHEMICAL ABSTRACTS, vol. 68, no. 17, April 22, 1968 Columbus, Ohio, USA B.I. MEDOVAR ET AL. "Isother-mal crystallization during pressure welding-soldering of heat-resistant nickel alloys" page 7820, column 1, abstract-no. 80955g & Strukt. Svoistva Zharoproch. Metal. Mater., Akad. Nasuk SSSR, Inst. Met. 1967, 161-6
- CHEMICAL ABSTRACTS, vol. 94, no. 18, May 04, 1981, Columbus, Ohio, USA S.F. DUNAEV et al. "Study of the interaction of titanium with cobalt and nickel under high pressures" page 277, column 2, abstract- no. 143 968y

## Description

The present invention relates to a high-strength joined parts of Ni-Ti alloys, in particular, Ni-Ti alloys component having shape memory characteristic or superelasticity characteristic with different metals or different alloys and a joining method therefor.

The shape memory effect and the superelasticity effect aforementioned both result from so-called thermal elastic form Martensitic transformation with small transformation hysteresis, and the shape memory effect is a phenomenon wherein the deformation in the Martensite temperature range returns to the original shape when heating above a temperature of Martensite inverse transformation (Austenite transformation). On the other hand, the superelasticity effect is a phenomenon wherein a material deformed in the Austenite temperature range recovers elastically as much as 8 % deformation strain as a rubber even without the heating as above by the stress-induced Martensite transformation accompanied with deformation.

As a material put into the most advanced practice among the materials exhibiting such shape memory and superelasticity effects, there is Ni-Ti alloys. Products actually applied and put the shape memory effect into practice with this Ni-Ti alloys include blowing-out port of air controller, pressure-regulating valve of rice-cooking jar, medical bone plate, etc. Also, products applied and put the superelasticity effect into practice include orthodontic wire, cup wire of brassiere, spectacle frame, medical guide wire, etc.

Further, at present, the development of surrounding technologies is also being progressed accompanying with such practical uses. One thereamong is a joining technique of Ni-Ti alloys with different metals.

The Ni-Ti alloys is a specific alloy having the ductility while being an intermetallic compound. The composition range is in the vicinity of a ratio of Ni to Ti being 1:1 in terms of atomic ratio or in an extremely narrow range added with very small amount of particular metal thereto, and, if this ratio shifts slightly, it becomes brittle rapidly. Moreover, since this alloy has high activity, it reacts easily with many metals such as Fe, Cu and Ni to produce a brittle reaction phase. The production of this reaction phase is making the welding and soldering of Ni-Ti alloys with different metals material difficult.

Conventionally, with respect to the joining of Ni-Ti alloys, Ni-Ti alloys can be easily joined between themselves by fusion welding methods such as laser welding, TIG welding and electronic beam welding or by pressure welding methods such as upset butt welding, flash butt welding and friction pressure welding, and, thereamong, it is known that the upset butt welding is superior in the point of strength.

However, such technique that Ni-Ti alloys and different metals other than said alloy are directly welded in high strength has not been known. This is originated from that, because of high activity of Ni-Ti alloys, it reacts easily with Fe, Cu, Ni, etc. being mating metals, at the time of heating for welding to end up to produce a brittle reaction phase. Whatever welding methods aforementioned might be used, therefore, the brittle reaction phase was produced in the joined area making it impossible to obtain the strength endurable for practical use.

For this reason, the direct welding of Ni-Ti alloys with different metals has been said to be impossible. There, following two methods have been adopted in the conventional joining techniques.

One of them is mechanical joining method. This is a method for joining by such means as to crimp with rivets etc. and to fasten with screw, which had however the defects that the joined parts became large and the looseness was caused by repeated actions.

Moreover, other one method is plating/soldering method. This is a method, wherein the joining face of Ni-Ti alloys component is plated beforehand with easily solderable metal, e.g. nickel, copper alloy or the like, and the soldering with mating component is performed through this plating, thereby preventing the reaction between Ni-Ti alloys and fusible metal being a brazing material and achieving a stabilized joint strength. Because of the dependence of joint strength on the adhesive strength of plating, however, joining of positions to be highly stressed was impossible.

The invention was made in view of the problems as above, and discloses a joining method for firmly joining both components without damaging said characteristics of Ni-Ti alloys by rationally treating the brittle reaction phase produced on fusing, when directly joining a component comprising Ni-Ti alloys with a component comprising different metals or different alloys by welding, and a joined parts obtained by such method.

### SUMMARY OF THE INVENTION

The methods for joining components are defined in claims 1-4 and the joined structure is defined in claims 5-7.

The joined parts of Ni-Ti alloys with different metals of the invention has joined interfacial parts of Ni-Ti alloys with different metals other than said alloy, comprising a melt forged structure obtained through the reactive fusion due to the fusion of at least one metal bordering on said joined interface and the application of pressure, and a hot forged structure of Ni-Ti alloys obtained by softening said alloy at high temperature and applying pressure on the side of Ni-Ti alloys and a hot forged structure of said different metals obtained by softening said metal at high temperature and applying pressure on the side of different metals across said melt forged structure.

And, at this time, it is effective that the shape memory alloy or the superelasticity alloy comprising 40 - 60 at % Ni-Ti alloy or Ni-Ti alloy substituted a part of Ni or Ti in this Ni-Ti alloy with one kind or two or more kinds of Fe, Cr, Al, V, Pd, Ag, Mn, Mg, Co, Nb, Mo and Cu in a range of not exceeding 20 at % in total amount is used as a Ni-Ti type alloy, and, if using any of simple metals of Ni, Ti, Cu and Fe, Ni-based alloy, Ti-based alloy, Fe-based alloy and Cu-based alloy as a different metals, large effect can be obtained.

Moreover, in the joining method of the invention the joining faces of Ni-Ti alloys component and different metals component are contacted one another upon joining both components, a melt forged structure obtainable through the reactive fusion of said both components and the application of pressure is formed on the joining interface by heating the joining parts to a fusion temperature of either one of components in short time thus reactively fusing this locally and softening both components in the area bordering on that fused area at high temperature and by simultaneously applying high pressure to the joining parts through both components for compressive processing, and further a hot forged structure of Ni-Ti alloys obtainable by softening Ni-Ti alloys component at high temperature and by applying pressure is formed on the side of said component and a hot forged structure of different metals obtainable by softening different metals component at high temperature and by applying pressure is formed on the side of said component across said melt forged structure.

Furthermore, other joining method of the invention comprises forming a thrust-out portion with forged structure around the outer circumference of joining interface by compressing the joined parts with a pressure of not less than 2 kg/mm² through both components thus thrusting out said reactively fused area from joined interface to outside in the joining method aforementioned, and, at this time, it is effective to cut off the thrust-out portion and to finish by polishing.

Still more, other joining method of the invention is implementing a joining method that heat-radiating portions consisting of high heat-conductive material are attached to the side of Ni-Ti alloys component and the side of different metals component in the neighborhood of joining faces and said reactively fuced product thrust out to outside is solidified under rapid cooling by contacting it with said heat-radiating portions.

### BRIEF DESCRIPTION OF THE DRAWING

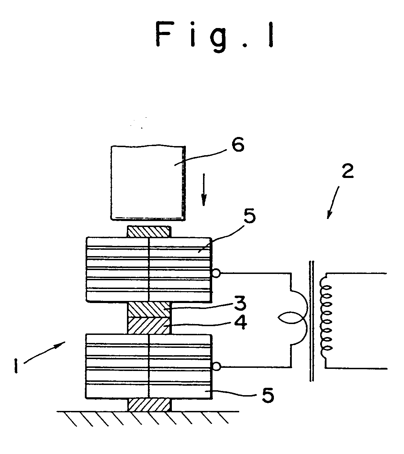

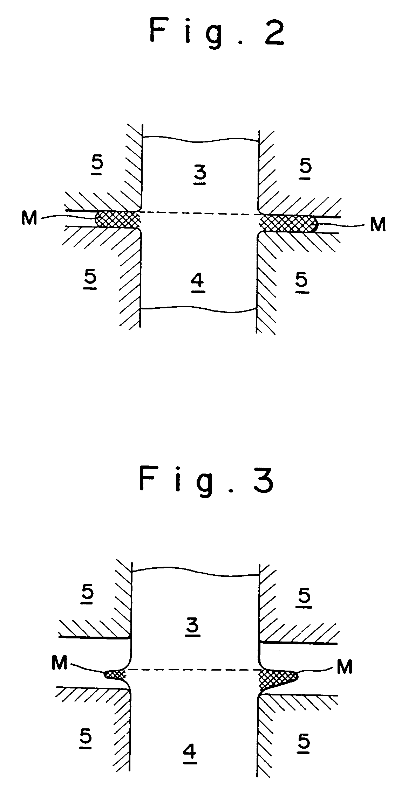

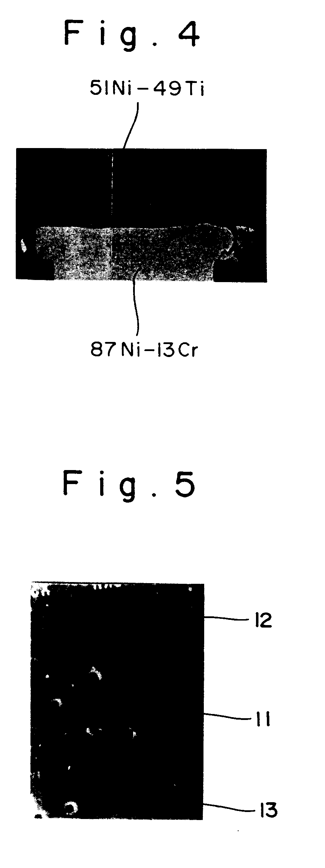

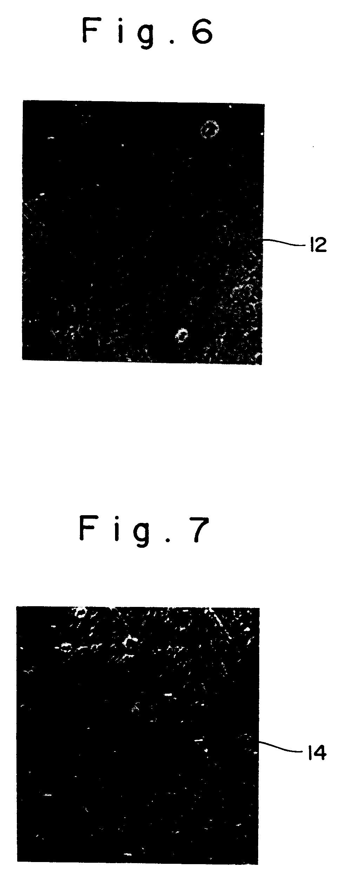

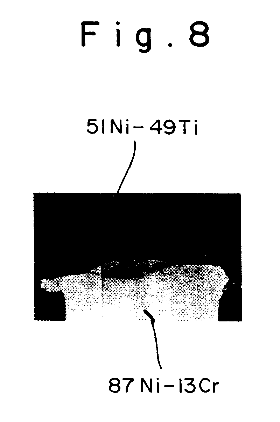

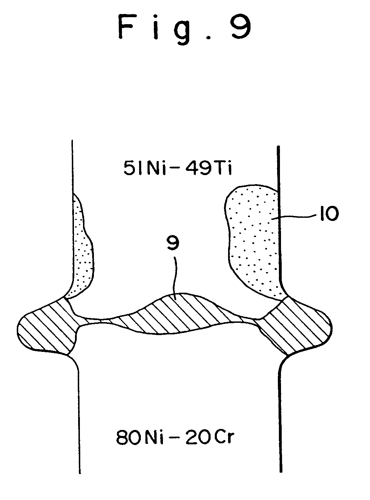

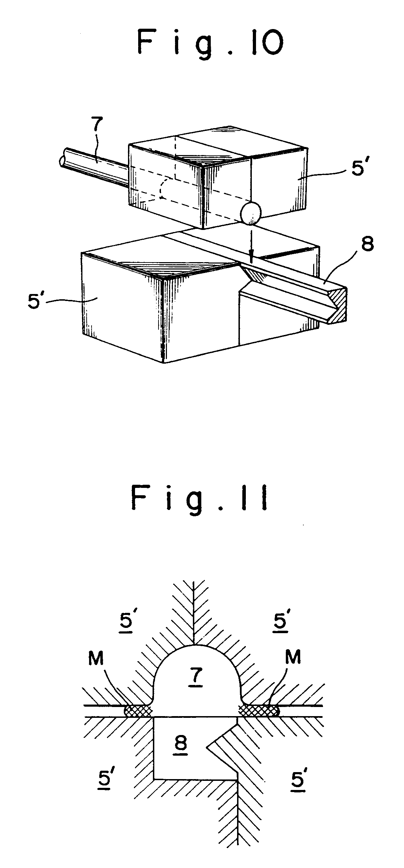

Fig. 1 is an illustration diagram showing a device used for the joining method of the invention, Fig. 2 is a sectional view showing the joined parts by the joining method of the invention, Fig. 3 is a sectional view showing the joined parts by the comparative joining method, Fig. 4 is a photograph of metal structure (magnification: 17 times) showing the joined parts of 51.0 at % Ni-Ti with 87 wt % Ni - 13 wt % Cr joined by the joining method of the invention, Fig. 5 is a photograph of metal structure (magnification: 1500 times) enlarged the joined parts in Fig. 4, Fig. 6 is an enlarged photograph of metal structure (magnification: 700 times) showing the hot forged structure of 51.0 at % Ni-Ti alloy in the joined parts of Fig. 4, Fig. 7 is an enlarged photograph of metal structure (magnification: 700 times) showing the base material structure of 51.0 at % Ni-Ti alloy in the neighborhood of joined area of Fig. 4, Fig. 8 is a photograph of metal structure (magnification: 17 times) showing the joined parts of 51.0 at % Ni-Ti with 87 wt % Ni - 13 wt % Cr joined by the comparative joining method, Fig. 9 is an illustration diagram of metal structure showing the joined parts when joined 51.0 at % Ni-Ti with 80 wt % Ni - 20 wt % Cr by the conventional upset butt welding, Fig. 10 is an illustration diagram showing the joining test used in Example 3, and Fig. 11 is a sectional view showing the joined parts in the joining test of Example 3.

### DETAILED DESCRIPTION OF THE INVENTION

As described, in the invention, a layer consisting of melt forged structure of Ni-Ti alloys and different metals was formed at the joining interface and, across this, layers of hot forged structure of each metal were formed as a constitution of the joined parts of both metals. At this time, the melt forged structure implies a metal structure that was solidified in the state of the pressurizing force having been transmitted to the melt by applying the pressure to the joining interface simultaneously at the time when said either metal material was fused at this joining interface or continuously from the time before it was fused. And, this melt forged structure is preferable to be formed in a thickness of not more than about 20 µm over the whole joining interface. Hence, the melt produced by the local heating at the joining interface is sufficient to be in short time and in very small amount and, in the invention, the pressurizing force is applied to that slightly produced melt to solidify, thereby obtaining a thin layered melt forged structure.

However, when the fused phase is caused in large amount or brittle reactively fused phase of Ni-Ti alloys and different metals is produced depending on the heating conditions etc. at the joining interfacial parts, the strength of the joined parts ends up to decrease. For example, when the end faces of 51.0 at % Ni-Ti alloy wire and 80 wt % Ni - 20 wt % Cr alloy wire were butted one another to perform the conventional upset butt welding, it was made sure that two kinds of brittle phases of a forged structure (9) consisting of fused reaction phase remaining at the joining interface and around its outer circumferential area and a diffused layer (10) between liquid phase and solid phase produced through the reaction between the fused product forced out to the outside of joined parts and the surface of Ni-Ti alloy component were produced as shown in Fig. 9 and the very rupture making these two layers as a starting point was a primary cause of decreased joint strength.

There, in the invention, the joined parts is strengthened in such a way that, for such fused reaction phase, said brittle reactively fused phase and an extra fused phase are thrust out to the outside of components by softening both the side of different metals and the side of Ni-Ti alloys across the fused reaction phase at high temperature thus utilizing as a pressure medium and by giving the compressive processing to the joining interface, and, at the same time, the melt forged structure is formed by giving the forging processing to the remaining minimum amount fused phase thus solidifying this. Further, since the pressurizing force is also applied to said areas softened at high temperature on both sides of melt forged structure, the hot forged structures are formed serving for preventing the stress concentration at the joined interface.

Here, while the minimum pressuring force varys depending on the physical properties of different metals, not less than 2kg/mm² are required in general. If the pressurizing force is under 2 kg/mm², the force to thrust out the reactively fused phase etc. from the joining interface to outside would be short and the forged structure obtained would also be insufficient.

Moreover, for said brittle diffused layer, it is important to suppress the melt produced at the joining interface to a minimum amount thus minimizing the melt thrust out through the application of pressure to the joining interface for preventing the production of brittle diffused layer. Hence, the heating of joining parts was restricted to short time and to be local. Even when the production level of melt is too high, however, heat-radiating portions consisting of high heat-conductive material are attached beforehand to both components on the side of Ni-Ti alloys and the side of different metals in the neighborhood of the joining parts in the invention, thereby the large amount of melt thrust out to the outside of joining interface can be rapidly solidified thus preventing the production of diffused reaction phase of Ni-Ti type alloys with melt. Particularly, if both heat-radiating portions (heat-radiating holders) are brought close to the joining interface one another so as the thrust-out melt to be immediately contacted with the heat-radiating holders, the melt would be extended between both heat-radiating holders, which is more effective for the rapid cooling.

Here, the heat-radiating portion (heat-radiating holders) is contacted with the melt and solidifys this under rapid cooling as described above, but it further has an action for fixing the position of joining area so as not to shift when applying the pressure to the joining interface.

Besides, this heat-radiating holders may be cooled naturally by air cooling, but, when using a radiating holders consisting of a material relatively poor in the heat conductivity, large effect can be obtained if forcedly cooling said heat-radiating holders with water, liquid gas, etc.

Besides, since said melt thrust out to the outside of components is solidified around the joining interface and forms the thrust-out portion having normal forged structure, it is possible to retain high strength for the joined parts by finishing the surface by polishing after cut off said thrust-out portion.

Moreover, in the invention, since the joining parts of both components is heated locally in short time, the deterioration of the characteristics, in particular, the deterioration of the shape memory characteristic and the super-elasticity characteristic due to the influence of heat in the area other than the joined parts can be prevented, but the provision of said heat-radiating holders is further making more effective.

And, this heat-radiating holders has an effect for preventing the deformation in the area other than the joined parts in addition to such cooling effect and the joining of precision parts comprising profile materials is also possible.

Besides, for the heating method of joining interface, usual resistance welder can be utilized.

In following, the invention will be illustrated based on the examples.

### Example 1

Using a welder equipped with compression device (1) and welding power source (2) as shown in Fig. 1, following experiments were conducted.

A superelasticity wire (3) with a wire diameter of 2.6 mm and a length of 20 mm comprising (51.0 at % Ni - balance Ti) as a Ni-Ti alloy and each of different metal wires (4) similarly with a wire diameter of 2.6 mm and a length of 20 mm, the compositions of which are shown in Table 1, were clamped between air-cooling electrodes (5) consisting of copper-chromium alloy as heat-radiating holders as shown in Fig. 1. First, as the inventive joining method, the end faces of said superelasticity wire and different metal wire were pressurized to 20 kg/mm², 10 kg/mm² or 3 kg/mm² with pressure device (6), and, in this state, selecting an optimal value of current between 1500 and 3000 A depending on the difference of physical properties of each metal, the current was turned on for 1/20 second for joining. Secondly, as the comparative joining method, the pressurizing force was decreased to 1.5 kg/mm² for joining both wires under the same conditions except the pressurizing force.

The state of joined parts according to the inventive joining method and that according to the comparative joining method at this time are shown in Fig. 2 and Fig. 3, respectively. In Fig. 2, the thrust-out melt (M) is contacted with air-cooling electrodes (5)(5) by a plane in the state of being inserted between these electrodes (5)(5) and is solidified under forced cooling, whereas, by the comparative joining method, the pressurizing force being decreased, as in Fig. 3, the amount of thrust-out melt (M) was less and it was solidified under natural cooling.

Moreover, by the conventional joining method, wherein the end face of said superelasticity wire is plated with Ni and each of different metals wires shown in Table 1 is soldered thereto, both wires were joined.

Using these joined wires, the tensile strength test pulling both ends clamped was performed. The results are shown in Table 1, wherein a specimen having a tensile strength of not less than 50 kg/mm² was marked with ⓞ, a specimen having not less than 30 kg/mm² and less than 50 kg/mm² with ○, a specimen having not less than 20 kg/mm² and less than 30 kg/mm² with △, and a specimen having less than 20 kg/mm² with X. Besides, the strength required for practical use is not less than 20 kg/mm².

**Table 1**

| Different metals (wt %) | Pressurizing force on joining (kg/mm²) | | | | Plating/soldering |
|---|---|---|---|---|---|
| | 20 | 10 | 3 | 1.5 | |
| 87Ni-13Cr | ⓞ | ⓞ | ○ | △ | X |
| 75Ni-25Cu | ⓞ | ○ | - | - | - |
| Fe(SK4) | ○ | ○ | X | - | - |
| SUS 304 | ○ | ○ | X | - | X |
| Ti | X | △ | △ | - | X |
| 60Cu-40Ni | ○ | ○ | - | - | - |

As evident from Table 1, all of the joined parts according to the inventive joining method, the pressurizing force on joining being 10 kg/mm², have the strength of not less than 20 kg/mm², which can be said to be sufficiently practical. Whereas, the strength of joined parts according to the conventional soldering are all as low as under 20 kg/mm² and, by the comparative joining method, too, the pressurizing force on joining being as low as 1.5 kg/mm², sufficient strength could not be obtained.

Moreover, photographs of welded structure of the inventive joined parts when joined 87Ni-13Cr wire as a mating material of Ni-Ti alloy (51.0 at % Ni-balance Ti) wire among said joining wires at a pressurizing force of 20 kg/mm² are shown in Fig. 4 and Fig. 5, and a photograph of welded structure of the comparative joined parts when joined at a pressure of 1.5 kg/mm² is shown in Fig. 8.

According to Fig. 4, the reaction phase of both alloys is thrust out to the outside of joined parts, and further, according to Fig. 5, the joined interface being enlarged, it can be seen that an about 10 µm thick melt forged structure (11) is formed at the joined interface and, across this, a hot forged structure (12) of 51.0 at % Ni-Ti alloy on one side and a hot forged structure (13) of 87Ni-13Cr on the other side are formed.

Moreover, microscopic structural photographs of the hot forged structure (12) of said 51Ni-Ti alloy and the base material structure (14) of 51Ni-Ti alloy not subjected to the hot forging are shown in Fig. 6 and Fig. 7, respectively.

On the contrary, according to the structural photograph in Fig. 8, it is evident that the reaction phase is left behind inside the joined interface. Namely, it can be said that, because of short of pressurizing force and/or insufficient formation of hot forged structure, the reactively fused phase was solidified leaving it behind as it was.

### Example 2

Next, using a joined wire joined SUS 304 wire shown in Table 1 with a superelasticity wire comprising 51.0 at % Ni-Ti alloy at a pressurizing force of 20 kg/mm² or 1.5 kg/mm² and a joined wire joined by the conventional plating/soldering, the repeated bending test bending the specimen by an angle of 90 ° each in front and behind (total 180 °) making the position of joined interface as a center was performed at a velocity of 30 times/min repeating 240 times.

As a result, the joined wire by the inventive joining method at a pressurizing force of 20 kg/mm² recovered completely to the original shape without any deformation after the completion of test and the superelasticity characteristic was not deteriorated at any rate. Whereas, the joined wires by the comparative joining method at a pressurizing force of 1.5 kg/mm² and by the conventional plating/soldering were ruptured at the joined parts on the way of test.

### Example 3

Following experiments were performed with the welder shown in Fig. 1.

A round wire with a wire diameter of 1.5 mm and a length of 40 mm comprising 50.8 at % Ni-balance Ti and being subjected to the memory treatment in linear shape for 30 minutes at 500 °C (hereinafter, round wire) as a Ni-Ti alloy and two profile wires for the rim of spectacle frame with a length of 200 mm comprising Monel (hereinafter, profile wire) as different metals were used.

After clamped between air-cooling electrode holders (5')(5') comprising copper and chromium as shown in Fig. 10 so as to join the side faces one another by overlapping the tip portion of the profile wires (8) on both ends of the round wire (7) by 5 mm, respectively, the current of 1200 A was turned on for 1/30 second in the state of being pressurized at 10 kg/mm² to complete the joining. As shown the state at this time in Fig. 11, it was known that the melt (M) thrust out from the joining interface was contacted with the air-cooling electrode holders (5')(5') as heat-radiating holders and was solidified under rapid cooling.

Next, after cut off and polished the thrust-out portion thrust out from the joined interface to outside, each profile wire on both sides was chucked, and the repeated twisting test twisting the specimen by an angle of 120 ° each right and left (total 240 °) in the axial direction was performed at a velocity of 10 times/min repeating 1,000 times.

As a result, the joined parts was not ruptured and the superelasticity characteristic was also not hardly deteriorated.

In this way, according to the inventive joining method, the different metals material and Ni-Ti alloys material can be joined in high strength without any influence on the superior characteristics of Ni-Ti alloys. Whereas, by the comparative joining method and the conventional joining method, the joint strength was too low to perform the repeated bending test.

As described, in accordance with the invention, since Ni-Ti alloys having superior characteristics such as shape memory characteristic and superelasticity characteristic can be easily joined with other different metals in high strength and without deteriorating said characteristics, the invention exerts remarkable effects for widely spreading the use of Ni-Ti alloys material, and the like.

A joined parts of Ni-Ti alloys with different metals having a joined interfacial parts of Ni-Ti alloys with different metals other than said alloy, comprising a melt forged structure obtained through the reactive fusion due to the fusion of at least one metal bordering on said joined interface and the application of pressure, and a hot forged structure of Ni-Ti alloys obtained by softening said alloy at high temperature and applying pressure on the side of Ni-Ti alloys and a hot forged structure of said different metals obtained by softening said metal at high temperature and applying pressure on the side of different metals across said melt forged structure, and a direct joining method for obtaining this joined parts are disclosed.

It is possible to join Ni-Ti alloys component with different metals component providing high strength without deteriorating the characteristics.

## Claims

1. A method for joining a Ni-Ti alloy component with a different metal component comprising the step of contacting the joining faces of the joining parts of said Ni-Ti alloy component and said different metal component, pressing the joining faces to each other and heating the joining parts to a fusion temperature of either one of said components in short time thus producing locally a reactively fused portion, said method being further characterized by a further step of softening both components in the parts bordering on said reactively fused portion at high temperature and by simultaneous further compressing the joining parts to each other with high pressure, thereby forming hot forged structures (12, 13) in said bordering parts with a thin layered melt forged structure (11) therebetween, said melt forged structure comprising said reactively fused portion.

2. The joining method according to claim 1, wherein said joining parts are compressed with a pressure of not less than 2 kg/mm² thus thrusting out said reactively fused portion from said joining faces to outside, thereby forming a thrust-out portion (M).

3. The joining method according to claim 2, wherein said components are held by heat-radiating holders (5) in the neighborhood of said joining faces, said holders contacting said reactively fused portion thrust out of said joining faces thus solidifying rapidly and simultaneously forming said melt forged structure.

4. The joining method according to one of claims 2 and 3, wherein said thrust-out portion (M) is cut off and finished by polishing.

5. A joined structure of Ni-Ti alloy component and a different metal component, said joined structure having hot forged structures (12, 13) at each of said components produced by the method according to one of claims 1 to 4, and a thin layered melt forged structure (11) comprising a reactively fused joining portion of said Ni-Ti alloy and said different metal component between said hot forged structures.

6. The joined structure according to claim 5, wherein the Ni-Ti alloy is a shape memory alloy or a superelasticity alloy comprising 40 - 60 at % Ni-Ti alloy or Ni-Ti alloy substituted a part of Ni or Ti in this Ni-Ti alloy with one kind or two or more kinds of Fe, Cr, Al, V, Pd, Ag, Mn, Mg, Co, Nb, Mo and Cu in a range of not exceeding 20 at % in total amount.

7. The joined structure according to claim 5, wherein the different metal is any of Ni, Ti, Cu, Fe, Ni-based alloy, Ti-based alloy, Fe-based alloy and Cu-based alloy.

## Patentansprüche

1. Verfahren zum Verbindung einer Komponente aus einer Ni-Ti-Legierung mit einer Komponente aus einem anderen Metall mit den Schritten des Kontaktierens der Verbindungsflächen der zu verbindenden Teile der Komponente aus der Ni-Ti-Legierung und der Komponente aus dem anderen Metall und des Pressens der Verbindungsflächen gegeneinander sowie des Erhitzens der zu verbindenden Teile auf die Verschmelztemperatur einer der Komponenten in kurzer Zeit, um auf diese Weise örtlich einen reaktiv verschmolzenen Abschnitt zu erzeugen, dadurch gekennzeichnet, daß das Verfahren den weiteren Schritt des Erweichens beider Komponenten in den an den reaktiv verschmolzenen Abschnitt grenzenden Teilen bei hoher Temperatur und des gleichzeitigen weiteren Pressens der zu verbindenden Teile gegeneinander unter hohem Druck aufweist, um auf diese Weise heißgeschmiedete Strukturen (12, 13) in den angrenzenden Teilen mit einer dünnschichtigen schmelzgeschmiedeten Struktur (11) dazwischen, die den reaktiv verschmolzenen Abschnitt umfaßt, auszubilden.

2. Verbindungsverfahren nach Anspruch 1, bei dem die zu verbindenden Teile mit einem Druck von nicht weniger als 2 kg/mm² beaufschlagt werden, um auf diese Weise den reaktiv verschmolzenen Abschnitt von den Verbindungsflächen nach außen zu drücken und auf diese Weise einen herausgedrückten Abschnitt (M) zu bilden.

3. Verbindungsverfahren nach Anspruch 2, bei dem die Komponenten durch wärmeabstrahlende Halter (5) in der Nachbarschaft der Verbindungsflachen gehalten werden, wobei diese Halter den von den Verbindungsflächen herausgedrückten reaktiv verschmolzenen Abschnitt kontaktieren und auf diese Weise eine rasche Verfestigung herbeiführen und gleichzeitig die schmelzgeschmiedete Struktur ausbilden.

4. Verbindungsverfahren nach einem der Ansprüche 2 und 3, bei dem der herausgedrückte Abschnitt (M) abgetrennt und durch Polieren endbearbeitet wird.

5. Verbundene Struktur aus einer Komponente einer Ni-Ti-Legierung und einer Komponente eines anderen Metalls, die heißgeschmiedete Strukturen (12, 13) an jeder der Komponenten, die durch das Verfahren gemäß einem der Ansprüche 1 bis 4 hergestellt wurden, und eine dünnschichtige schmelzgeschmiedete Struktur (11), die einen reaktiv verschmolzenen Verbindungsabschnitt der Ni-Ti-Legierung und der Komponente des anderen Metalls zwischen den heißgeschmiedeten Strukturen umfaßt, aufweist.

6. Verbundene Struktur nach Anspruch 5, bei der die Ni-Ti-Legierung eine Legierung mit Formerinnerungsvermögen oder eine Legierung mit Superelastizität ist, welche eine 40 - 60 % Ni-Ti-Legierung oder Ni-Ti-Legierung umfaßt, wobei ein Teil des Ni oder Ti in dieser Ni-Ti-Legierung durch ein, zwei oder mehr der nachfolgenden Elemente Fe, Cr, Al, V, Pd, Ag, Mn, Mg, Co, Nb, Mo und Cu ersetzt ist, und zwar in einem Bereich, der insgesamt 20 % nicht übersteigt.

7. Verbundene Struktur nach Anspruch 5, bei der das andere Metall Ni, Ti, Cu, Fe, eine Legierung auf Ni-Basis, eine Legierung auf Ti-Basis, eine Legierung auf Fe-Basis oder eine Legierung auf Cu-Basis ist.

## Revendications

1. Procédé d'assemblage d'un élément d'alliage de Ni-Ti et d'un élément d'un métal différent, comprenant des étapes de mise en contact de faces d'assemblage des pièces à assembler de l'élément d'alliage de Ni-Ti et de l'élément de métal différent, l'application d'une pression aux faces d'assemblage l'une vers l'autre et le chauffage des pièces d'assemblage à une température de fusion de l'un des éléments pendant un temps court avec production locale d'une partie formée par fusion réactive, le procédé étant en outre caractérisé par une étape supplémentaire de ramollissement des deux éléments dans les parties de bordure de la partie formée par fusion réactive à température élevée, et par une compression supplémentaire simultanée des pièces d'assemblage l'une contre l'autre avec une pression élevée, pour la formation de structures forgées à chaud (12, 13) dans les parties de bordure, avec une structure forgée à l'état fondu (11) sous forme d'une mince couche placée entre elles, la structure forgée à l'état fondu contenant la partie formée par fusion réactive.

2. Procédé d'assemblage selon la revendication 1, dans lequel les parties d'assemblage sont comprimées avec une pression qui n'est pas inférieure à 2 kg/mm² (2.10⁷ Pa) si bien que la partie formée par fusion réactive est chassée à l'extérieur des faces d'assemblage, avec formation d'une partie (M) qui est chassée à l'extérieur.

3. Procédé d'assemblage selon la revendication 2, dans lequel lesdits éléments sont maintenus par des supports de rayonnement de chaleur (5) au voisinage des faces d'assemblage, les supports étant au contact de la partie formée par fusion réactive et chassées vers l'extérieur des faces d'assemblage, avec ainsi solidification rapide et formation simultanée de la structure forgée à l'état fondu.

4. Procédé d'assemblage selon l'une des revendications 2 et 3, dans lequel la partie (M) qui est chassée vers l'extérieur est coupée et subit une finition par polissage.

5. Structure assemblée d'un élément d'alliage de Ni-Ti et d'un élément d'un métal différent, la structure assemblée ayant des structures forgées à chaud (12, 13) sur chacun des éléments, produites par le procédé selon l'une des revendications 1 à 4, et une structure forgée à l'état fondu (11) sous forme d'une couche mince comprenant une partie d'assemblage formée par fusion réactive de l'alliage de Ni-Ti et de l'élément de métal différent entre les structures forgées à chaud.

6. Structure assemblée selon la revendication 5, dans laquelle l'alliage de Ni-Ti est un alliage de Ni-Ti contenant 40 à 60 atomes % de nickel ou un alliage de Ni-Ti dans lequel une partie du nickel ou du titane de l'alliage est remplacée par un ou deux métaux ou plus choisis parmi Fe, Cr, Al, V, Pd, Ag, Mn, Mg, Co, Nb, Mo et Cu, en quantité ne dépassant pas 20 atomes % de la quantité totale.

7. Structure assemblée selon la revendication 5, dans laquelle le métal différent est choisi parmi le nickel, le titane, le cuivre, le fer, un alliage à base de nickel, un alliage à base de titane, un alliage à base de fer ou un alliage à base de cuivre.
